# EUROPÄISCHE PATENTSCHRIFT

(11) **EP 1 410 953 B1**
(45) Veröffentlichungstag und Bekanntmachung des Hinweises auf die Patenterteilung: **17.01.2007**
(21) Anmeldenummer: 03103717.9
(22) Anmeldetag: 07.10.2003
(51) Int. Cl.: B60R 16/02

(54) **Dachbedieneinheit zum Anbringen am Dachhimmel eines Fahrzeugs**
Operating unit for installation on the roof lining of a vehicle
Unité de commande pour l'installer à l'habillage de plafond du véhicule

(30) Priorität: 14.10.2002 DE 10247864
(43) Veröffentlichungstag der Anmeldung: 21.04.2004
(73) Patentinhaber: Hella KGaA Hueck & Co., 59552 Lippstadt (DE)
(72) Erfinder: Lange, Petrik, 59557, Lippstadt (DE); Kleineaschoff, Gerhardt, 59329, Wadersloh (DE); Reuter, Jürgen, 59609, Anröchte (DE); Bierleutgeb, Gerhard, 59597, Erwitte (DE); Schürhoff, Konrad, 59302, Oelde (DE)

(56) Entgegenhaltungen:
- EP-A- 1 097 841
- DE-A1- 10 044 738

## Beschreibung

Die Erfindung betrifft eine Dachbedieneinheit nach dem Oberbegriff von Anspruch 1.

Aus DE 100 61 866 A1 ist eine Dachbedienenheit, bekannt, die als Trägerteil ein Gehäuse mit einem am Fahrzeugdach montierbaren Gehäuseoberteil und einem damit über Rastelemente verbundenen Gehäuseunterteil auf weist. In dem Gehäuseoberteil sind eine mit elektronischen Bauelementen bestückte Leiterplatte einer Steuereinrichtung und Leuchtmittel für eine Innenleuchte angeordnet. Die Leiterplatte ist über ein Flachbandkabel an einem Steckverbinder angeschlossen, der elektrische Anschlusskontakte aufweist, die an einer Abzweigdose mit Anschlussleitungen verbindbar sind. An dem in Gebrauchsstellung dem Fahrzeuginnenraum zugewandten Gehäuseunterteil sind Betätigungselemente vorgesehen, die über einen Bewegungsübertragungsmechanismus mit auf der Leiterplatte angeordneten elektrischen Schaltern verbunden sind. Das Gehäuseunterteil hat Fensterausschnitte, die das Licht der Leuchtmittel hindurchlassen.

Bei der Montage der Leuchte im Innenraum des Fahrzeugs wird das zunächst noch von dem Gehäuseunterteil getrennte Gehäuseoberteil an der Fahrzeugdecke befestigt, derart, dass die damit verbundene Leiterplatte an der dem Fahrzeuglnnenraum zugewandten Unterseite des Gehäuseoberteils angeordnet ist. Danach wird der Dachhimmel an der Fahrzeugdecke montiert und mit einem an dem Gehäuseoberteil vorgesehenen Flansch verklebt. Der Dachhimmel weist Öffnungen für den Durchtritt der Rastelemente, des Bewegungsübertragungsmechanismus und des von den Leuchtmitteln abgestrahlten Lichts auf Bei der Montage des Dachhimmels wird das freie Ende des Flachbandkabels mit dem daran angeordneten Steckverbinder zum Verbinden mit den Anschlussleitungen seitlich an dem Dachhimmel herausgeführt. Anschließend wird das die Betätigungselemente und die Fensterausschnitte aufweisende Gehäuseunterteil am Dachhimmel positioniert und mit Hilfe der Rastelemente mit dem Gehäuseoberteil verrastet. Es werden also mehrere Teile der Dachbedieneinheit nacheinander an der Fahrzeugdecke montiert, weshalb der Einbau der Dachbedieneinheit in das Fahrzeug noch vergleichsweise zeitaufwendig ist Da die Montage der Teile und das Verkleben des Gehäuseoberteils mit dem Dachhimmel über Kopf erfolgt, ist der Einbau der Dachbedieneinheit zudem mühsam und anstrengend. Ungünstig ist außerdem, dass die Leiterplatte mit den elektronischen Bauelementen zu Beginn der Montage frei liegt und daher leicht beschädigt werden kann. Schließlich Ist die Dachbedieneinheit aber auch wenig servicefreundlich, da die für einen Austausch der Leiterplatte der Dachhimmel demontiert werden und die Klebeverbindung zwischen dem Dachhimmel und dem Gehäuseoberteil gelöst werden muss.

Aus EP 1 097 841 A2 ist ferner eine gattungsgemäße Dachbedieneinheit, die ein Grundmodul und mehrere lösbar damit verbindbare Steckmodule aufweist. Das Grundmodul hat ein am Dachhimmel angreifendes Halteteil, an dem ein Bussteuergerät, eine Innenleuchte und ein Betätigungselement vorgesehen sind. Das Betätigungselement ist zum Auslösen einer Funktion des Kraftfahrzeugs über eine Steuereinrichtung mit der Innenleuchte verbunden. Seitlich an dem Grundmodul sind mehrere, als Kontaktbuchsen ausgestaltete Steckverbindungsteile vorgesehen. Die Steckmodule haben jeweils ein zu den Steckverbindungsteilen passendes, stiftförmiges Gegensteckverbindungstell, mit dem sie auf das Steckverbindungsteil aufsteckbar sind, um das Fahrzeug nachträglich mit zusätzlichen Komfortfunktionen nachzurüsten. Die Steckverbindungstelle und die Gegensteckverbindungsteile benötigen jedoch relativ viel Platz. Außerdem Ist die Herstellung der Innenleuchtenanordnung und insbesondere der Steck- und Gegensteckverbindungsteile noch relativ aufwändig.

Eine aus DE 100 44 738 A1 bekannte Dachbedieneinheit hat ein etwa dreleckiges, am Dachhimmel angreifendes Halteteil, an dem drei Funktionsbaugruppen angeordnet sind. Eine der Funktionsbaugruppen ist als Leseleuchte ausgestaltet, die an einem Trägerteil ein Leuchtmittel und eine Bus-Steuereinrichtung aufweist Über die Bus-Steuereinrichtung ist die Leseleuchte mit einer an dem Halteteil vorgesehenen weiteren Bus-Steuereinrichtung verbunden. An dem Halteteil ist ferner ein Schalter zum Betätigen der Leseleuchte vorgesehen. Das Trägerteil ist über eine Steckkupplung mit dem Halteteil verbindbar. An dem Trägerteil sind Anschlusskontakte und an dem Halteteil dazu passenden Gegenkontakte vorgesehen, welche die Anschlusskontakte bei mit dem Halteteil verbundenem Trägerteil kontaktieren. In Verbindungsstellung ist das Trägerteil mittels einer an diesem angeordneten Rastnase mit dem Halteteil verrastet. Auch bei dieser Dachbedieneinhelt benötigt die Steckkupplung noch relativ viel Bauraum. Außerdem ist die Herstellung der Steckkupplung noch relativ aufwändig.

Es besteht deshalb die Aufgabe, eine Dachbedieneinheit der eingangs genannten Art zu schaffen, die Kostengünstig herstellbar ist und eine kompakte Anordnung der Anschluss- bzw. Gegenkontakte ermöglicht.

Diese Aufgabe wird mit dem Merkmalen des Patentanspruch gelöst.

Die Anschluss- und/oder Gegenkontakte können dann kostengünstig als Stanzgitter hergestellt werden. Zwischen zueinander benachbarten Kontakten angeordnete Trennwände ermöglichen es, eine Vielzahl von Kontakten auf engem Raum anzuordnen, ohne dass die Kontakte beim Aufstecken des Trägerteils auf das Halteteil mit einander in Berührung geraten oder überbrückt werden. Trotz der beim Betrieb des Fahrzeugs auftretenden Erschütterungen kann eine dauerhaft zuverlässige Kontaktierung der Anschlusskontakte mit den Gegenkontakten erreicht werden.

In vorteilhafter Weise ist es möglich, das Halteteil, die Anschlusskontakte und die damit verbundenen Anschlussleitungen bereits vor dem Einbau des Dachhimmels in das Fahrzeug an dem Dachhimmei zu montieren, so dass der Dachhimmel dann für den späteren Einbau der Leuchte bereits fertig vorkonfektionlert ist Nach der Montage des Dachhimmels im Fahrzeug braucht dann das Trägerteil nur noch auf das Halteteil aufgesteckt und mit diesem verriegelt zu werden. Dabei kontaktieren die Anschlusskontakte die Gegenkontakte und stellen die elektrische Verbindung zwischen den an dem Trägerteil angeordneten elektrischen Komponenten und der Stromversorgung bzw. den weiteren elektrischen Einrichtungen des Fahrzeugs her. In vorteilhafter Weise kann durch diese Djrektkontaktierung die für die Montage der Dachbedieneinheit im Fahrzeug erforderliche Überkopfarbeit erheblich reduziert werden. Auch ermöglicht die Dochbedieneinheit ein schnelle Montage im Fahrzeugzeug, so dass an einer Fertigungsstraße für Fahrzeuge die für die Montage der Dachbedieneinheit vorgesehene Taktzeite entsprechend reduziert werden kann. Sollte es einmal zu einem Defekt an den an dem Trägerteil angeordneten elektrischen Komponenten kommen, lässt sich das Trägerteil nach Lösen der Verriegelung auf einfache Weise von dem Halteteil abziehen und durch ein entsprechendes Ersatzteil ersetzen. Die Dachbedieneinheit ermöglich also bei einer Reparatur einen schnellen und einfache Service, so dass Ausfallzeiten für das Fahrzeug praktisch vermieden werden.

Bei einer vorteilhaften Ausführungsform der Erfindung weist das Halteteil einen Halterahmen auf, der eine Aufnahmeöffnung für das Trägerteil umgrenzt und der Befestigungsstellen zum Verbinden mit dem Dachhimmel aufweist. Der Halterahmen kann an oder hinter einer Öffnung im Dachhimmel bzw. der Deckenverkleidung des Fahrzeugs angeordnet sein, so dass das Trägerteil in Montagestellung In die Dachhimmeiöffhung eingreift. Die Dachbedieneinheit kann dann besonders flach in den Dachhimmel integriert werden.

Vorteilhaft Ist, wenn die Verriegelungseinrichtung wenigstens eine Rasteinrichtung aufweist, die vorzugsweise an dem Halteteil mindestens einen Rastvorsprung und an dem Trägerteil zumindest eine dazu passende Rastvertiefung hat. Das verrastet dadurch beim Aufstecken auf das mit dem Dachhlmmel verbundene Halteteil, was eine noch einfachere und schneller Montage des Trägerteils im Fahrzeug ermöglicht. Gegebenenfalls ist es sogar möglich, dass wenigstens zwei Rasteinrichtung an der Aufnahmeöffnung diametral einander gegenüberliegend angeordnet sind. Die Rasteinrichtung kann dann auch zum Zentrieren bzw. Justieren des Trägerteils an dem Halteteil dienen.

Bei einer bevorzugten Ausführungsform der Erfindung sind die Gegenkontakte des Halteteils an der Innenseite des Halterahmens und die Anschlusskontakte am Außenumfang des Trägerteils angeordnet. Auch dadurch wird eine flacher Aufbau des Dachbedienteils ermöglicht. Die Anschluss- und Gegenkontakte sind bei in Verbindungsstellung befindlichem Halte- und Trägerteil innerhalb der Dachhimmelöffnung angeordnet und vom Fahrzeuginnenraum aus betrachtet durch das Halte- und Trägerteil verdeckt.

Bei einer anderen Ausführungsform der Erfindung sind die Anschlusskontakte an der in Gebrauchsstellung dem Fahrzeuginnenraum abgewandten Rückseite des Trägerteils und die Gegenkontakte an der Rückseite der Aufnahmeöffnung, vorzugsweise mit Abstand zum Umfangsrand der Aufnahmeöffnung angeordnet. Der Halterahmen des Trägerteils ist dann frei von elektrischen Kontakten und kann somit entsprechend schmal ausgebildet sein.

Bei einer zweckmäßigen Ausgestaltung der Erfindung sind die Gegenkontakte an einem die Aufnahmeöffnung überbrückenden Brückenteil vorzugsweise etwa mittig zur Aufnahmeöffnung angeordnet, wobei das Brückenteil mit seinen Enden mit dem Halterahmen verbunden ist. Dadurch ergibt sich ein materialsparendes und leichtes Halteteil, das beispielsweise als Kunststoffspritzgussteil einstückig hergestellt sein kann. Bei einer zweckmäßigen Ausgestaltung der Erfindung sind die Anschlusskontakte und/oder die Gegenkontakte etwa U-, V- und/oder L-förmig mit aufeinander zu- und voneinander wegbewegbaren Schenkelteilen ausgebildet, wobei das eine Schenkelteil mit einer Befestigungsstelle verbunden ist und das andere Schenkelteil die Kontaktierungsstelle aufweist. Die Kontakte können dann platzsparend an dem Halte- und/oder Trägerteil angeordnet sein, ermöglichen aber dennoch einen vergleichsweise großen Federweg, so dass auch beim Auftreten von Fertigungstoleranzen an dem Trägerteil und/oder dem Halteteil eine zuverlässige Kontaktlerung erreicht wird,

Vorteilhaft ist, wenn die elektrischen Anschlussleitungen durch Leiterbahnen eines Folienlelters gebildet sind, der vorzugsweise an der Rückseite des Dachhimmels angeordnet oder in diesen integriert ist. Dadurch kann insbesondere eine größere Anzahl von Anschlussleitungen platz- und gewichtsparend zwischen dem Dachhimmel und dem Fahrzeugdach angeordnet werden. Die Anschlussleitungen können unter anderem Leitungen für einen Daten- und oder Steuerbus sowie Stromversorgungsleltungen umfassen.

Nachfolgend sind Ausführungsbeispiele der Erfindung näher erläutert, Es zeigen:
- Fig, 1: eine Aufsicht auf die in Gebrauchsstellung einem Fahrzeuginnenraum zugewandte Vorderseite einer Dachbedieneinheit,
- Fig. 2: eine Seitenansicht der Dachbedleneinheit,
- Fig. 3: eine Ansicht auf die Rückseite eines ersten Ausführungsbeispiels der erfindungsgemäßen Dachbedieneinheit,
- Fig. 4: eine teilweise im Schnitt dargestellte perspektivische Teilansicht auf dle Rückseite des ersten Ausführungsbeispiels der Dachbedienelnhelt,
- Fig. 5: einen Längsschnitt auf die Schnittebene der Dachbedieneinheit gemäß Fig. 4,
- Fig.6: eine Ansicht auf die Rückseite eines zweiten Ausführungsbeispiels der erfindungsgemäBen Dachbedieneinheit,
- Fig. 7: einen Längsschnitt durch die Dachbedieneinheit entlang der in Fig. 4 mit VII bezeichneten Ebene, wobei die Dachbedieneinheit nur teilweise dargestellt ist,
- Fig. 8: eine Ausschnittvergrößerung zu Fig. 7, welche Ausschnittvergrößerung die Anschlusskontakte und die Gegenkontakte besonders gut erkennen lässt, und
- Fig. 9: eine Darstellung ähnlich Fig. 8, wobei jedoch die Gegenkontakte einen U-förmig ausgebildeten Kontaktabschnitt aufweisen.

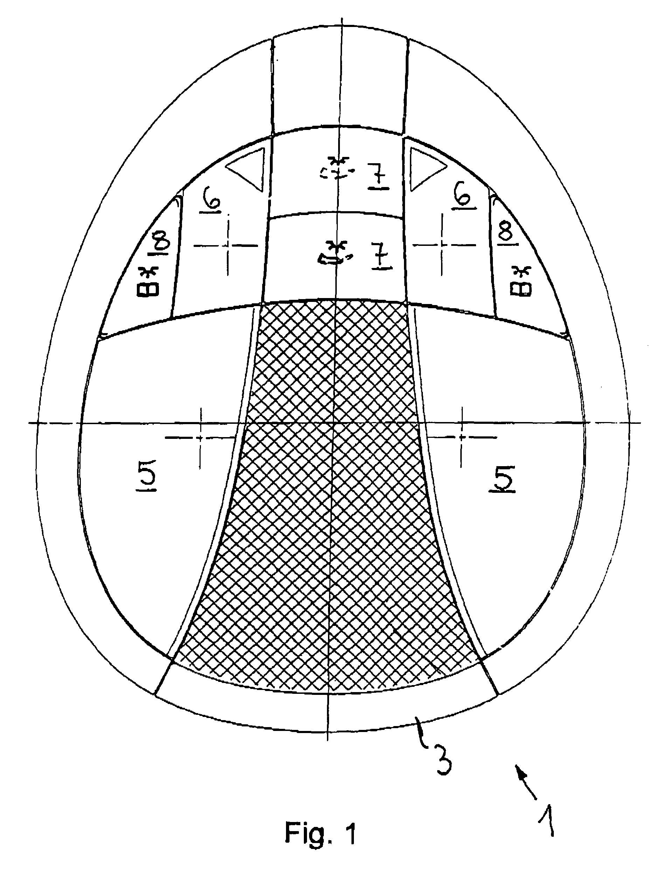

Ein im Ganzen mit 1 bezeichnete Dachbedleneinheit zum Anbringen am Dachhimmel 2 eines Fahrzeugs weist ein Trägerteil 3 und ein am Dachhimmel 2 befestigtes Halteteil 4 auf. Wie in Fig. 1 erkennbar ist, sind an dem Trägerteil 3 zwei Innenleuchten 5, zwei Leseleuchten 6, eine in der Zeichnung nicht näher dargestellte elektrische Steuereinrichtung und als Schalter- oder Taster ausgebildete Betätigungselemente 7, 8 angeordnet. Die Betätigungselemente 7 sind zum Einstellen der Helligkeit der Innenleuchten 5 über die Steuereinrichtung mit Leuchtmitteln 9 der Innenleuchten 5 verbunden, die hinter Lichtscheiben angeordnet sind. Die Betätigungselemente 8 sind zum Ein- und Ausschalten der Leseleuchten 6 vorgesehen und über die Steuereinrichtung mit Leuchtmitteln 10 für die Leseleuchten 6 verbunden, Die Steuereinrichtung ist außerdem über Anschlussleitungen an der Stromversorgung (Batterie) des Fahrzeugs, an Fondleuchten, an Türkontakten zum Betätigen der Innenleuchten 5, der Fondleuchten und/oder den Leseleuchten 6, einem Regen-Lichtsensor, einem elektrischen Antriebsmotor für Scheibenwischer und Beieuchtungseinfichtungen des Fahrzeugs verbunden. Die Anschlussleitungen sind durch Leiterbahnen von Folienleitern 10 gebildet.

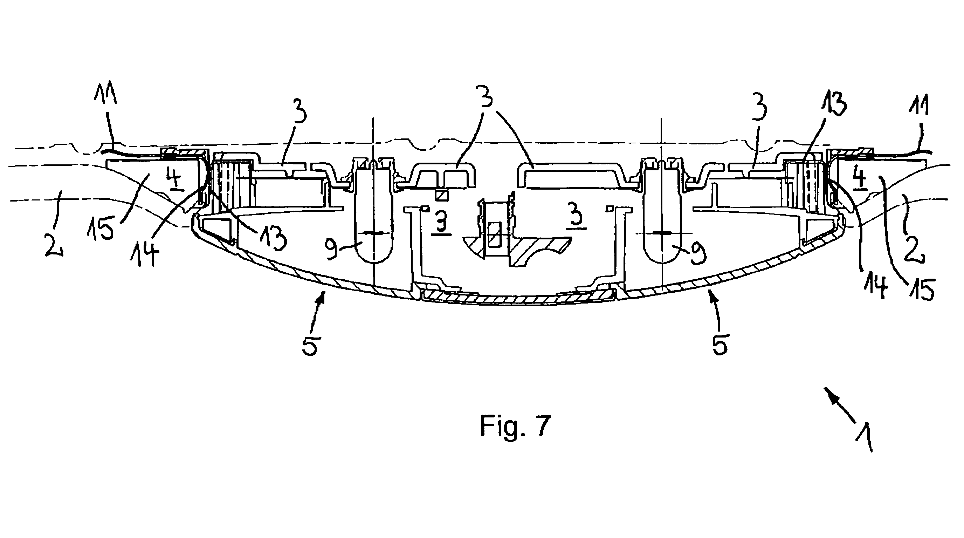

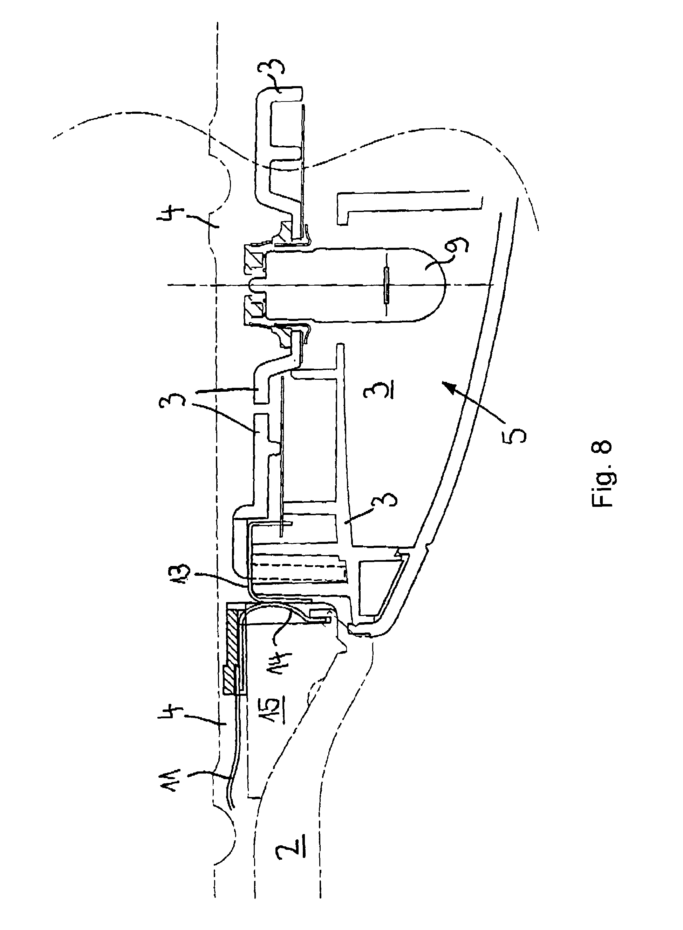

Wie in Fig. 7 bis 9 besonders gut erkennbar ist, weist das Halteteil 4 Bereegungsstellen zum Verbinden mit dem Dachhimmel 2 auf, die in Gebrauchsstellung an der Rückseite des Dachhimmels 2 an einem Randbereich einer in dem Dachhimmel 2 vorgesehenen Öffnung angreifen. An den Befestigungsstellen ist das Halteteil 4 mit dem Dachhlmmel 2 verklebt oder auf andere Weise verbunden Bei der Montage des Trägerteils 3 Im Fahrzeug wird das Trägerteil 3 über eine Steckkupplung 12 mit dem Trägerteil verbunden und mit Hilfe einer Verriegelungseinrichtung, auf nachstehend noch näher beschrieben wird, in Verbindungsstellung arretiert.

An dem Trägerteil 3 sind Anschlusskontakte 13 angeordnet, die über in der Zeichnung nicht näher dargestellte Leiterbahnen elektrisch mit der Steuereinrichtung, den Innenleuchten 5, den Leseleuchten 6 und den Betätigungselementen 7, 8 verbunden sind. An dem Halteteil 4 sind zu den Anschlusskontakten 13 passende elektrische Gegenkontakte 14 vorgesehen, die mit den Anschlussleitungen der Follenlelter 10 verbunden sind. Die Gegenkontakte 14 sind derart relativ zu den Anschlusskontakten 13 angeordnet, dass sie bei auf das Halteteil 4 aufgestecktem, in Gebrauchsstellung befindlichem Trägerteil 3 die Anschlusskontakte des Trägerteils 3 an Kontaktlerungsstellen berühren. Die Dachbedieneinhelt weist also Mittel für eine Direktkontaktierung auf, die bewirken, dass die an dem Trägerteil 3 angeordneten elektrischen Komponenten bzw. Schaltkreise beim Aufstecken des Trägerteils 3 auf das Halteteil 4 mit den fahrzeugseitigen Anschlussleitungen elektrisch verbunden werden.

Bei der Montage der Dachbedleneinheit 1 wird zunächst das Halteteil 4 mit den Gegenkontakten 14 und den Folienleitern 10 am Dachhimmel 2 fixiert. Danach wird die auf diese Weise vormontierte Anordnung am Fahrzeugdach montiert. Dies kann beispielsweise in der Weise erfolgen, dass die Anordnung durch eine In der Fahrzeugkarosserie vorgesehene Öffnung für eine Heckscheibe In den Innenraum des Fahrzeugs gebracht und dann am Dach des Fahrzeugs befestigt wird. Anschließend wird das Trägerteil 3 mit den daran fertig montierten Innenleuchten 5, den Leseleuchten 6, den Betätigungselement 7, 8 und den Anschlusskontakten 3 auf das Haltteil 4 aufgesteckt und mit diesem verriegelt.

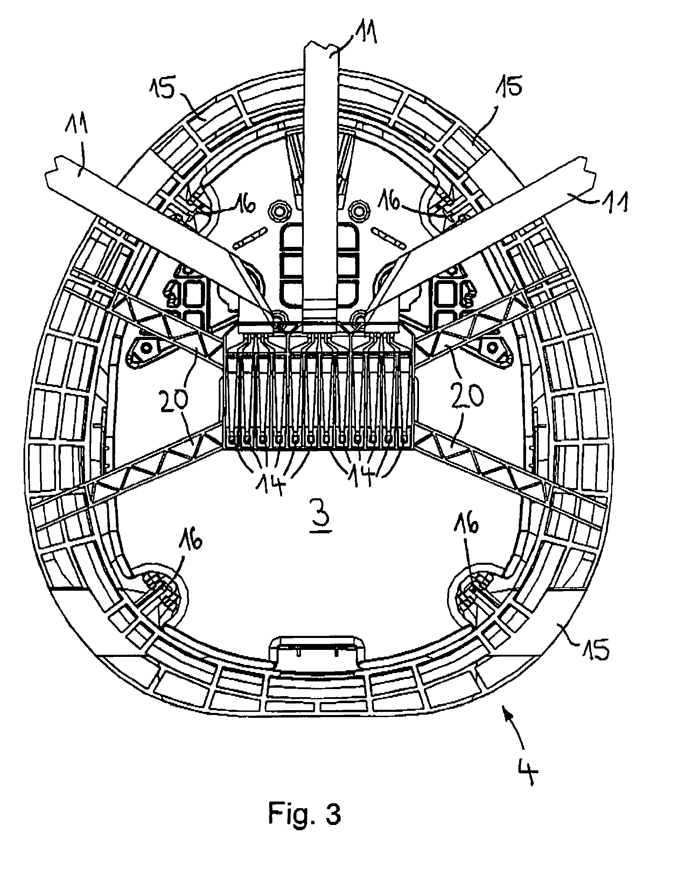

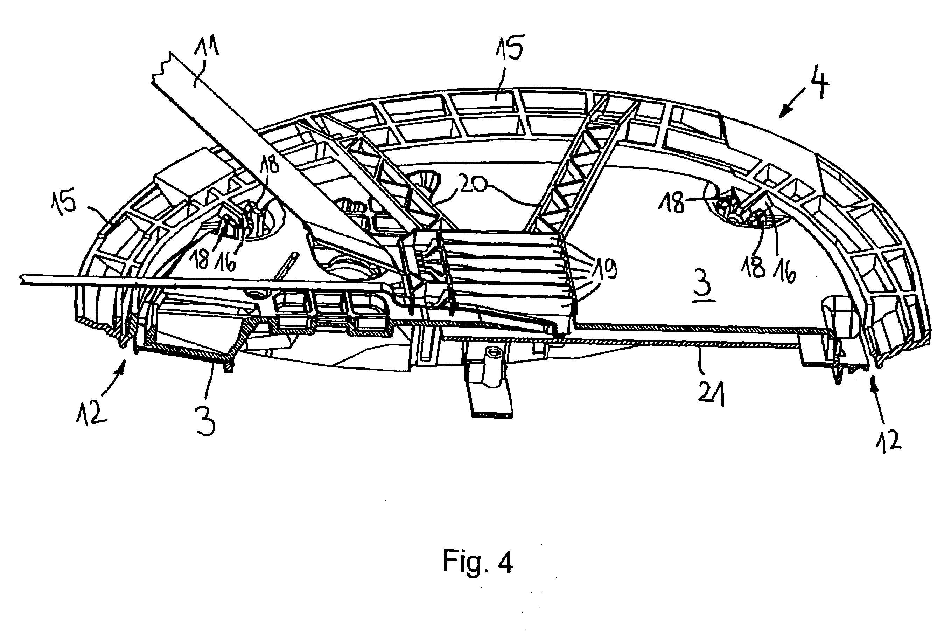

In Fig. 3 und 4 ist erkennbar dass das Halteteil 3 einen Halterahmen 15 aufweist, der eine Aufnahmeöffnung für das Trägerteil 3 umgrenzt. Der Halterahmen 15 liegt am Randbereich der Dachhimmelöffnung an und umgrenzt diese.

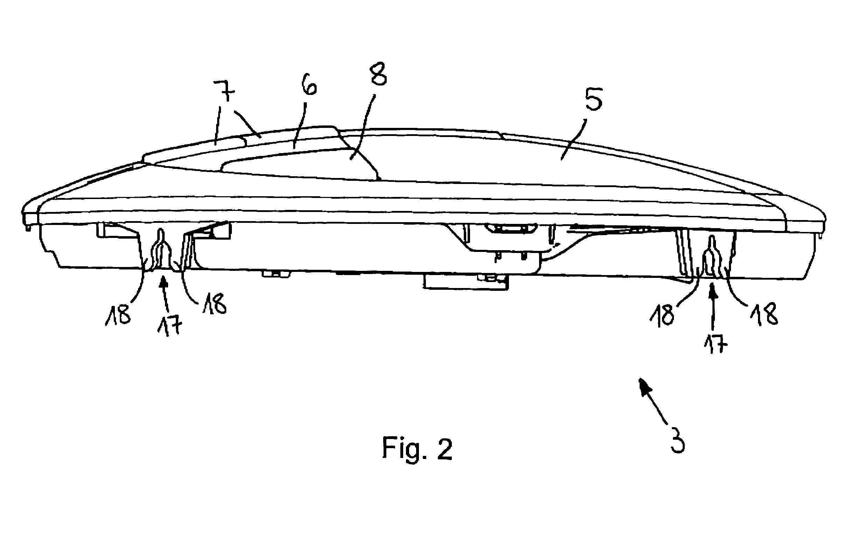

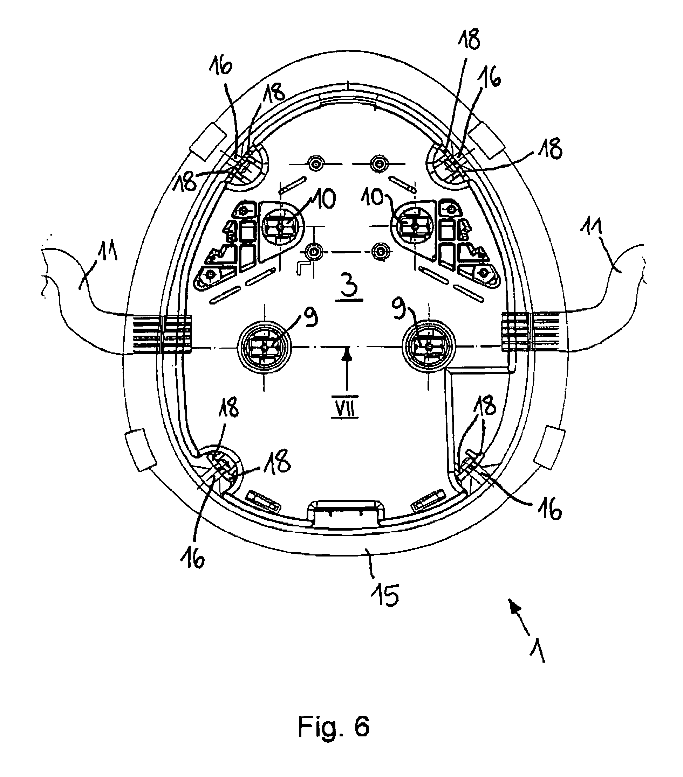

Die Verriegelungseinrichtung hat an dem Halteteil Rastvorsprünge 16, die als zylindrische oder gerundete Stifte ausgebildet sind, welche an der Innenseite des Halterahmens 15 etwa in der durch den Halterahmen 15 aufgespannten Ebene in die Aufnahmeöffnung vorstehen. An dem Trägerteil 3 sind zu den Rastvorsprüngen 16 passende Rastvertlefungen 17 angeordnet, die -wie in Fig. 2 erkennbar ist - an gabelförmigen Halteelementen vorgesehen sind, deren Gabelarme 1 elastisch aufeinander zu- und voneinander wegbegebar sind. Der lichte Abstand zwischen den Gabelarmen 18 erweitert sich ausgehend von ihren freien Enden zum Grund der Rastvertiefung 17 hin. Er ist derart auf die Querschnittsabmessungen der Rastvorsprünge 16 abgestimmt, dass die Gabelarme 18 die Rastvorsprünge 16 in Verbindungsstellung beidseitig hintergreifen und dadurch das Trägerteil 3 formschlüssig mit dem Halteteil 4 verbinden. In Fig. 3 und 6 ist erkennbar, dass jeweils zwei der durch die Rastvorsprünge 16 und die Rasivertiefungen 17 jeweils gebildeten Rasteinrichtungen an der Aufnahmeöffnung für das Trägerteil 3 etwa diametral einander gegenüberliegen. Die Halteelemente bestehen vorzugsweise aus Metall oder Kunststoff.

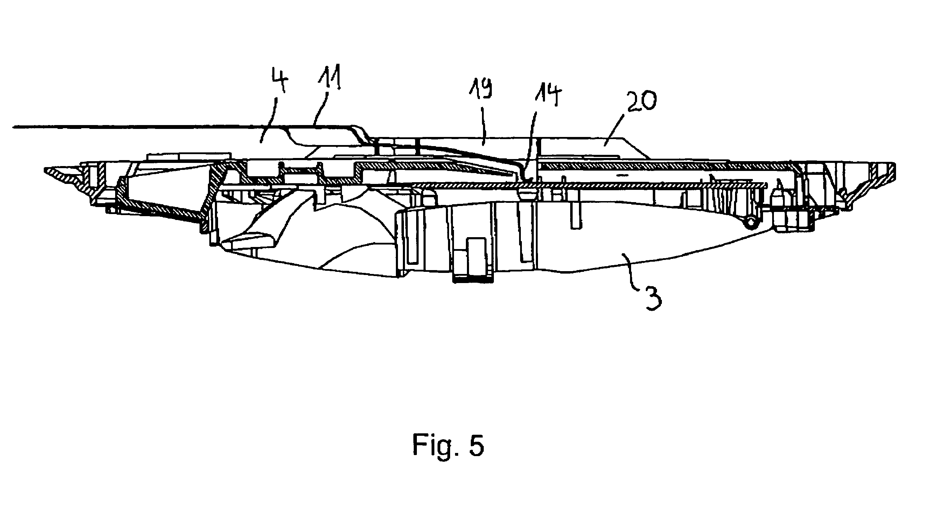

Bei dem Ausführungsbeispiel nach Fig. 3 bis 5 sind die Anschlusskontakte 13 an der In Gebrauchsstellung dem Fahrzeuginnenraum abgewandten Rückseite des Trägertels 3 und die Gegenkontakte 14 an der Rückseite der Aufnahmeöffnung angeordnet. Dabei sind die Gegenkontakte 14 als Federzungen mit einem Befestigungsende und einer davon beabstandeten Kontaktlerungsstelle ausgebildet sind, an welcher der Gegenkontakt 14 in Gebrauchsstellung jeweils an dem Ihm zugeordneten Anschlusskontakt 13 gegen die Rückstellkraft des Werkstoffs des Gegenkontakts 14 angreift.

Wie in Fig. 3 und 4 besonders gut erkennbar ist, sind mehrere Federzungen zur Bildung einer Kontaktrelhe an einem Isolierkörper etwa parallel nebeneinander angeordnet und durch zwischen den Federzungen befindliche isolierende Trennwände 19 voneinander beabstandet. Der die Gegenkontakte 14 tragende Isolierkörper ist etwa mittig an einem die Aufnahmeöffnung überbrückenden Brückenteil 20 angeordnet, das an seinen Enden einstückig mit dem Halterahmen verbunden ist. Auch der Isolierkörper kann einstückig mit dem Brückenteil 20 ausgebildet sein. Die Anschlusskontakte 13 sind bei dem Ausführungsbelsplel nach Fig. 3 bis 5 jeweils durch eine metallische Beschichtung gebildet die an der Oberfläche einer Leiterplatte angeordnet ist, die in der Zeichnung nicht näher dargestellte elektronische Bauelemente für die Steuereinrichtung trägt.

Bel den Ausführungsbeisplelen nach Fig. 6 bis 9 sind die Gegenkontakte 14 an der Innenseite des Halterahmens 15 und die Anschlusskontakte 13 am Außenumfang des Trägerteils 2 angeordnet. In Fig. 6 ist erkennbar, dass beidseits des Trägerteils 3 jeweils eine Kontaktanordnung mit mehreren Anschlusskontakten 13 und Gegenkontakten 14 vorgesehen ist die Jeweils zwischen zwei Rasteinrichtungen angeordnet ist.

Bei dem Ausführungsbeispiel nach Fig, 8 sind die Gegenkontakte 14 in einer etwa rechtwinklig zur Erstreckungsebene des Halterahmens 15 verlaufenden Ebene L-förmig abgewinkelt, wobei die Anschlussleitungen jeweils mit dem freien Ende eines von dem Trägerteil 3 entfernten ersten L-Schenkels des Gegenkontakts 14 verbunden und ein zweiter L-Schenkel dem Anschlusskontakt 3 zugewandt ist und diesen an einer Kontaktlerungsstelle berührt. Die Kontaktierungsstelle ist etwa mittig an einer dem Trägerteil 3 zugewandten Ausbauchung des zweiten L-Schenkels angeordnet. Das freie Ende dieses L-Schenkels greift in eine an dem Halteteil 4 gebildete Tasche ein, die einen Bewegungsfreiraum aufweist, in den das freie Ende des zweiten 1-Schenkels ausweichen kann, wenn die Ausbauchung durch den daran angreifenden Anschlusskontakt 13 elastisch verformt wird. Die Anschlusskontakte sind als Kontaktplatten ausgebildet.

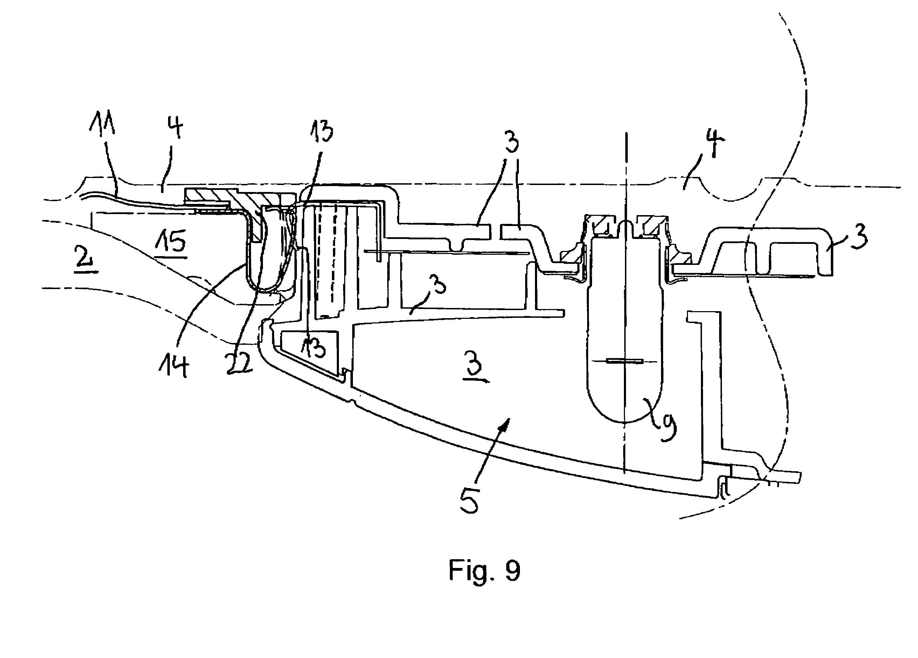

Bei dem Ausführungsbeispiel nach Fig. 9 sind die Gegenkontakte 14 etwa U-förmig ausgebildet wobei die Anschlussleitungen jeweils mit dem freien Ende eines von dem Trägerteil 3 entfernten ersten U-Schenkels verbunden und ein zweiter U-Schenkel den Anschlusskontakt 13 berührt. Wie in Fig. 9 strichliniert dargestellt ist, ist das freie Ende des zweiten U-Schenkel In Gebrauchsstellung gegen die Rückstellkraft des Werkstoffs des Gegenkontakts 14 aus einer Ruhelage in Richtung auf den ersten U-Schenhel ausgelenkt. Außerdem ist erkennbar, dass das freie Ende des zweiten U-Schenkel zu dem ersten U-Schenkel hin abgewinkelt ist. Benachbart zu dem freien Ende des zweiten U-Schenkels ist ein Anschlagelement 22 angeordnet, das in der nichtausgeienkten Neutrallage des Gegenkontakts 14 von diesem beabstandet ist und als Überdehnungsschutz für den Gegenkontakt 14 dient.

Die Dachbedieneinheit 1 zum Anbringen am Dachhimmel 2 eines Fahrzeugs weist also ein Trägerteil 3 auf, an dem zumindest eine Innenleuchte 5, eine elektrische Steuereinrichtung und wenigstens ein Betätigungselement 7, 8 angeordnet sind. Zum Auslösen einer Funktion des Kraftfahrzeugs ist das Betätigungselement 7, 8 über die Steuereinrichtung mit der Innenleuchte 5 und/oder weiteren elektrischen Komponenten des Fahrzeugs verbunden. Die Steuereinrichtung, die Innenleuchte 5 und/oder die Betäfigungseiemente 7, 8 sind über an dem Trägerteil 3 angeordnete elektrische Anschlusskontakte 13 mit Anschlussleitungen verbindbar. Die Dachbedieneinheit 1 weist eln in Gebrauchsstellung am Dachhimmel 2 angreifendes Halteteil 4 auf, das über eine Steckkupplung 12 mit dem Trägerteil 3 verbindbar und mittels einer Verriegelungseinrichtung in Verbindungsstellung verriegelbar ist, An dem Halteteil 4 sind mit den Anschlussleitungen verbundene elektrische Gegenkontakte 14 vorgesehen, die derart angeordnet sind, dass sie in Verbindungsstellung die Anschlusskontakte 13 des Trägerteils 3 kontaktieren.

## Patentansprüche

1. Dachbedieneinheit (1) zum Anbringen am Dachhimmel (2) eines Fahrzeugs, mit einem Trägerteil (3), an dem zumindest eine Innenleuchte (5), eine elektrische Steuereinrichtung und wenigstens ein Betätigungselement (7, 8) angeordnet sind, das zum Auslösen einer Funktion des Kraftfahrzeugs über die Steuereinrichtung mit der Innenleuchte (5) und/oder weiteren elektrischen Komponenten des Fahrzeugs verbunden Ist wobei die Steuereinrichtung, die Innenleuchte (5) und/oder die Betätigungselemente (7, 8) über, elektrische Anschlusskontakte (13) mit Anschlussleitungen verbindbar sind, wobei die Dachbedieneinheit (1) ein in Gebrauchsstellung am Dachhimmel (2) angreifendes Halteteil (4) aufweist, das über eine Steckkupplung (12) mit dem Trägerteil (3) verbindbar und mittels einer Verriegelungseinrichtung in Verbindungsstellung verriegelbar ist, wobei die Anschlusskontakte (13) an dem Trägerteil (3) angeordnet sind, und wobei an dem Halteteil (4) mit den Anschlussleitungen verbundene elektrische Gegenkontakte (14) vorgesehen sind, die derart angeordnet sind, dass sie in Verbindungsstellung die Anschlusskontakte (13) des Trägerteils (3) kontaktieren
**dadurch gekennzeichnet, dass** die Anschlusskontakte (13) und/oder die Gegenkontakte (14) als Federzungen mit einem Befestigungsende und einer davon beabstandeten Kontaktierungsstelle ausgebildet sind, und dass mehrere Federzungen zur Bildung einer Kontaktreihe durch isolierende Trennwände (19) voneinander beabstandet nebeneinander angeordnet sind.

2. Dachbedieneinheit (1) nach Anspruch 1, **dadurch gekennzeichnet, dass** das Halteteil (4) einen Halterahmen (15) aufweist, der eine Aufnahmeöffnung für das Trägerteil (3) umgrenzt und der Befestigungsstellen zum Verbinden mit dem Dachhimmel (2) aufweist.

3. Dachbedieneinheit (1) nach Anspruch 1 oder 2, **dadurch gekennzeichnet dass** die Verriegelungseinrichtung wenigstens eine Rasteinrichtung aufweist, die vorzugsweise an dem Halteteil (4) mindestens einen Rastvorsprung (16) und an dem Trägerteil (3) zumindest eine dazu passende Rastvertiefung (17) hat.

4. Dachbedieneinheit (1) nach einem der Ansprüche 1 bis 3, **dadurch gekennzeichnet, dass** die Gegenkontakte (14) des Halteteils (4) an der Innenseite des Halterahmens (15) und die Anschlusskontakte (1 3) am Außenumfang des Trägerteils (3) angeordnet.

5. Dachbedieneinheit (1) nach einem der Ansprüche 1 bis 4, **dadurch gekennzeichnet, dass** die Anschlusskontakte (13) an der in Gebrauchsstellung dem Fahrzeuginnenraum abgewandten Rückseite des Trägerteils (3) und die Gegenkontakte (14) an der Rückseite der Aufnahmeöffnung, vorzugsweise mit Abstand zum Umfangsrand der Aufnahmeöffnung angeordnet sind.

6. Dachbedieneinheit (1) nach einem der Ansprüche 1 bis 5, **dadurch gekennzeichnet**, das die Gegenkontakte (14) an einem die Aufnahmeöffnung überbrückenden Brückenteil (20) vorzugsweise etwa mittig zur Aufnahmeöffnung angeordnet sind, und dass das Brückenteil (20) mit seinen Enden mit dem Halterahmen (15) verbunden ist

7. Dachbedieneinheit (1) nach einem der Ansprüche 1 bis 6, **dadurch gekennzeichnet, dass** die Anschlusskontakte (13) und/oder die Gegenkontakte (14) etwa U-, V- und/oder L-förmig mit aufeinander zu- und voneinander wegbewegbaren Schenkelteilen ausgebildet sind, und dass das eine Schenkelteil mit einer Befestigungsstelle verbunden ist und das andere Schenkelteil die Kontaktierungsstelle aufweist.

8. Dachbedieneinheit (1) nach einem der Ansprüche 1 bis 7 **dadurch gekennzeichnet, dass** die elektrischen Anschlussieltungen durch Leiterbahnen eines Folienleiters (11) gebildet sind, der vorzugsweise an der Rückseite des Dachhimmels (2) angeordnet oder in diesen integriert ist.

## Claims

1. Overhead control unit (1) for installation in the roof lining (2) of a vehicle, containing a carrying element (3) which holds at least one courtesy lamp (5), an electronic control unit and at least one actuator (7, 8) which is connected with the courtesy lamp (5) and/or other electrical components of the vehicle to actuate a vehicle function via the control unit, where the control unit, the courtesy lamp (5) and/or the actuators (7, 8) have electrical contacts (13) via which they can be connected with connecting wires, where the overhead control unit (1) has a holding element (4) that holds on to the roof lining (2) when the control unit is in the operative position and that can be connected with the carrying element (3) by means of a plug connector (12) and locked in its connected position by means of a locking device, where the contacts (13) are located on the carrying element (3) and where mating electrical contacts (14) are designed to be connected with the connecting wires attached to the holding element (4), arranged in a way that they make contact with the contacts (13) of the carrying element (3) if in contact-making position, wherein the contacts (13) and/or the mating contacts (14) are designed as reeds one of whose ends is used as attachment point and the other as the contacting point some way remote from the other, and wherein several reeds are arranged to make up a row of adjacent contact every one of which is separated from the others by isolating walls (19).

2. Overhead control unit (1) as in claim 1, wherein the holding element (4) features a holding frame (15) around an aperture for slotting the carrying element (3) into and wherein the holding frame has attachment points at which it is connected with the roof lining (2).

3. Overhead control unit (1) as in claims 1 or 2, wherein the locking device features at least one snap-in device that has at least one locating lug (16) preferably located on the holding element (4), and wherein the carrying element (3) has at least one mating locating recess (17).

4. Overhead control unit (1) as in one of claims 1 to 3, wherein the mating contacts (14) on the carrying element (4) are located on the inner side of the holding frame (15) and the contacts (13) are located on the outer side of the carrying element (3).

5. Overhead control unit (1) as in one of claims 1 to 4, wherein the contacts (13) are located on the rear side of the carrying element (3) that faces away from the passenger compartment when in operating position, and wherein the mating contacts (14) are located on the rear side of the aperture, preferably leaving a gap to the edge of the aperture.

6. Overhead control unit (1) as in one of claims 1 to 5, wherein the mating contacts (14) are located on a bridging element (20) bridging the aperture, preferably in a way whereby the mating contacts (14) are located approximately central with regard to the aperture, and wherein the ends of the bridging element (20) are connected with the holding frame (15).

7. Overhead control unit (1) as in one of claims 1 to 6, wherein the contacts (13) and/or the mating contacts (14) are made up of legs that can be moved towards or away from one another to roughly make a U, V and/or L shape, and wherein one of the legs is connected to an attachment point and the other leg has the electrical point of contact on it.

8. Overhead control unit (1) as in one of claims 1 to 7, wherein the electrical connection wires consist of conductive tracks of a conductive foil (11) which is preferably located on the rear of the roof lining (2) or integrated in it.

## Revendications

1. Unité de commande de plafonnier (1) à fixer au pavillon (2) d'un véhicule, avec une pièce support (3), sur laquelle sont disposés au minimum une lampe intérieure (5), un système de commande électrique et au moins un élément d'actionnement (7, 8) qui est relié à la lampe intérieure (5) et/ou d'autres composants électriques du véhicule par l'intermédiaire du système de commande pour déclencher une fonction du véhicule,
le système de commande, la lampe intérieure (5) et/ou les éléments d'actionnement (7, 8) pouvant être reliés à des câbles de connexion par des contacts de connexion (13), l'unité de commande de plafonnier (1) présentant une pièce de maintien (4) qui touche le pavillon (2) en position d'utilisation et qui peut être rattachée à la pièce support (3) par un élément d'accouplement (12) et peut être verrouillée en position de rattachement à l'aide d'un mécanisme de verrouillage,
les contacts de connexion (13) étant disposés sur la pièce support (3),
et des contacts en regard électriques (14) reliés aux câbles de connexion étant prévus sur la pièce de maintien (4), contacts qui sont disposés de manière telle qu'en position de rattachement, ils touchent les contacts de connexion (13) de la pièce support (3),
**caractérisée en ce que** les contacts de connexion (13) et/ou les contacts en regard (14) sont conçus sous forme de languettes flexibles avec une extrémité de fixation et un point de connexion éloigné de celle-ci, et **en ce que** plusieurs languettes flexibles sont disposées les unes à côté des autres pour former une série de contacts en étant espacées les unes des autres par des parois de séparation isolantes (19).

2. Unité de commande de plafonnier (1) selon la revendication 1, **caractérisée en ce que** la pièce de maintien (4) présente un cadre de maintien (15), qui délimite un orifice de logement pour la pièce support (3) et qui présente des points de fixation pour le rattachement au pavillon(2).

3. Unité de commande de plafonnier (1) selon la revendication 1 ou 2, **caractérisée en ce que** le mécanisme de verrouillage présente au moins un dispositif d'encliquetage, qui a de préférence sur la pièce de maintien (4) au moins une saillie d'encliquetage (16) et sur la pièce support (3) au moins un évidement (17) correspondant.

4. Unité de commande de plafonnier (1) selon l'une quelconque des revendications 1 à 3, **caractérisée en ce que** les contacts en regard (14) de la pièce de maintien (4) sont disposés sur le côté intérieur du cadre de maintien (15) et les contacts de connexion (13) sur le pourtour extérieur de la pièce support (3).

5. Unité de commande de plafonnier (1) selon l'une quelconque des revendications 1 à 4, **caractérisée en ce que** les contacts de connexion (13) sont disposés sur le côté arrière de la pièce support (3) opposé à l'habitacle en position d'utilisation et les contacts en regard (14) sont disposés sur le côté arrière de l'orifice de logement, de préférence avec un espacement par rapport au bord périphérique de l'orifice de logement.

6. Unité de commande de plafonnier (1) selon l'une quelconque des revendications 1 à 5, **caractérisée en ce que** les contacts en regard (14) sont disposés sur une pièce de pontage (20) passant au-dessus de l'orifice de logement, de préférence approximativement au centre de l'orifice de logement, et **en ce que** la pièce de pontage (20) est rattachée au cadre de maintien (15) avec ses extrémités.

7. Unité de commande de plafonnier (1) selon l'une quelconque des revendications 1 à 6, **caractérisée en ce que** les contacts de connexion (13) et/ou les contacts en regard (14) sont conçus approximativement en forme de U, de V et/ou de L avec des languettes rapprochables ou écartables, et **en ce qu'**une languette est rattachée à un point de fixation et l'autre languette présente le point de contact.

8. Unité de commande de plafonnier (1) selon l'une quelconque des revendications 1 à 7, **caractérisée en ce que** les câbles de connexion électriques sont formés par des pistes conductrices d'un circuit imprimé souple (11), qui est de préférence disposé sur la face arrière du pavillon (2) ou est intégré dans celui-ci.
